# EUROPEAN PATENT APPLICATION

(11) **EP 3 017 745 A2**
(43) Date of publication of application: **11.05.2016**
(21) Application number: 15192610.2
(22) Date of filing: 02.11.2015
(51) Int. Cl.: A47L 13/22

(54) **STEAM MOP AND CONTROL SYSTEM THEREOF**

(30) Priority: 04.11.2014 CN 201410614833
(71) Applicant: Tsann Kuen (Zhangzhou) Enterprise Co., Ltd., Fujian 363107 (CN)
(72) Inventor: Liu, Jinyong, Zhangzhou Fujian 363107 (CN); Zheng, Zhenxing, Zhangzhou Fujian 363107 (CN)
(74) Representative: V.O.

(57) **Abstract**

A steam mop includes a mop body, a steam generator and a control system. The mop body includes a hollow mop head having side and bottom steam outlets. The control system includes a hollow valve seat, a valve member and a pushbutton. The valve seat communicates with the steam generator and the side and bottom steam outlets. The valve member is movable relative to the valve seat such that the control system is switchable between first and second states where the steam generated by the steam generator is expelled respectively from the bottom and side steam outlets. The pushbutton is coupled to the valve member, and is operable to drive movement of the valve member for switching the control system between the first and second states.

## Description

The disclosure relates to a mop, and more particularly to a steam mop.

In Chinese Patent No. CN100593998C, there is disclosed a steam mop. The steam mop can be controlled to spray steam out of a front or an underneath thereof by changing the angle between a mop handle and a mop head. However, when mopping a floor, it is often necessary to change the angle between the mop handle and the mop head to avoid obstacles, and to therefore cause accidentally and unnecessarily change the manner in which the steam ejects.

Therefore, an object of the disclosure is to provide a steam mop that can overcome the aforesaid drawback associated with the prior art.

According to the disclosure, a steam mop includes a mop body, a steam generator and a control system. The mop body includes a hollow mop head, and a graspable mop handle that is connected to the mop head. The mop head has a side portion that is formed with a side steam outlet, and a bottom portion that is formed with a bottom steam outlet. The steam generator is connected to the mop body and generates steam. The control system includes a mounting seat, a hollow valve seat, a valve member and a switch unit. The mounting seat is mounted in the mop head. The valve seat is connected to the mounting seat and communicates fluidly with each of the steam generator and the side and bottom steam outlets. The valve member extends into the valve seat, and is movable relative to the valve seat in an up-and-down direction such that the control system is switchable between a first state where the steam generated by the steam generator is expelled from the bottom steam outlet, and a second state where the steam generated by the steam generator is expelled from the side steam outlet. The switch unit includes a pushbutton that is mounted movably to the mounting seat, that is coupled to the valve member, and that is operable to drive movement of the valve member for switching the control system between the first and second states.

Another object of the disclosure is to provide a control system for a steam mop that can overcome the aforesaid drawback associated with the prior art.

According to the disclosure, a control system includes a valve member, a switch unit and a retention unit. The valve member is movable between first and second positions. The switch unit is coupled to the valve member, and is operable to move the valve member between the first and second positions. The retention unit includes an energy-storing member that is coupled to the switch unit, and that retards the operation of the switch unit to store energy, and subsequently releases energy to aid the operation of the switch unit when the switch unit is operated to move the valve member from one of the first and second positions to the other one of the first and second positions..

Other features and advantages of the disclosure will become apparent in the following detailed description of the embodiment with reference to the accompanying drawings, of which:
Fig 1 is a perspective view of an embodiment of a steam mop according to the disclosure;
Fig. 2 is a fragmentary sectional view of the embodiment, illustrating a control system mounted in a mop head;
Fig. 3 is an exploded perspective view of the control system;
Fig. 4 is a sectional view of the control system, illustrating the control system in a first state;
Fig. 5 is another sectional view of the control system, illustrating the control system in the first state;
Fig. 6 is still another sectional view of the control system, illustrating the control system in a second state; and
Fig. 7 is still another sectional view of the control system, illustrating the control system in the second state.

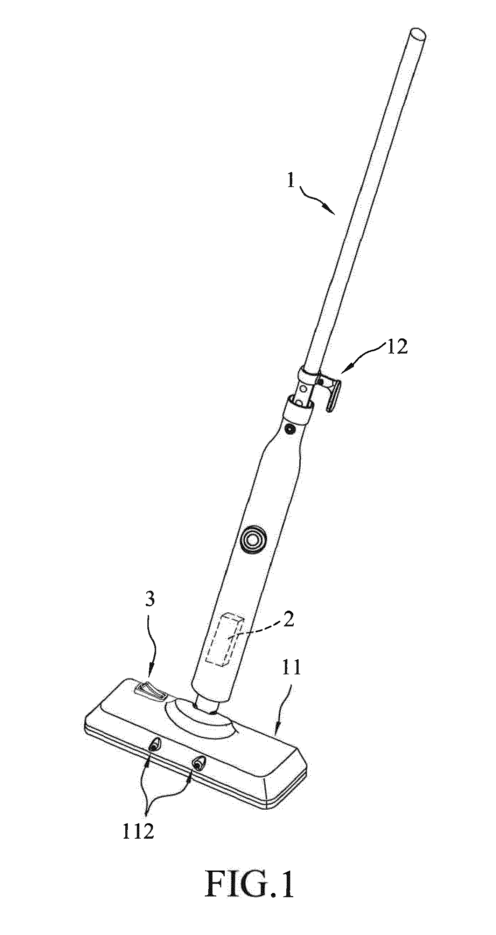

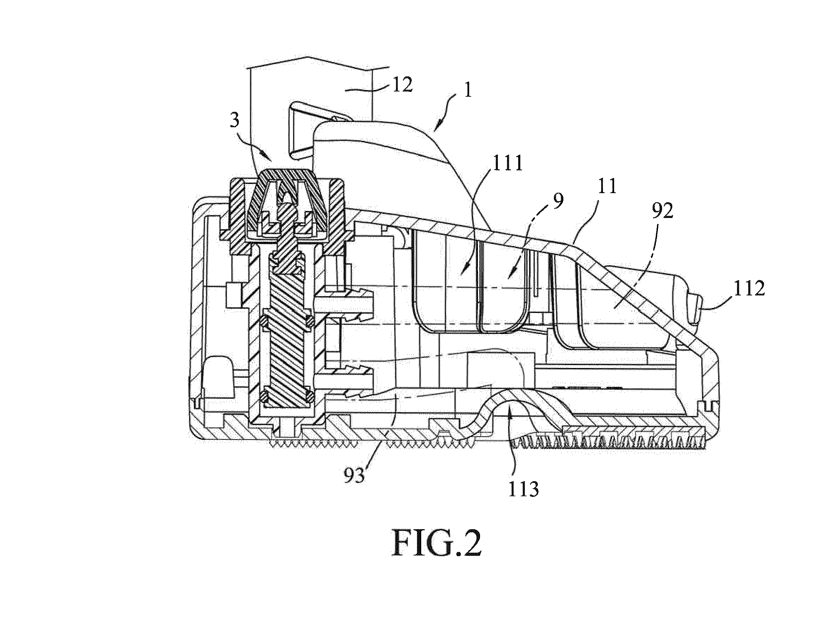

Referring to Figs. 1 and 2, an embodiment of a steam mop according to the disclosure includes a mop body 1, a steam generator 2 and a control system 3.

The mop body 1 includes a hollow mop head 11, and a graspable mop handle 12 connected to the mop head 11. The mop head 11 defines an installation space 111 therein, and has a front side portion that is formed with two side steam outlets 112, and a bottom portion that is formed with a bottom steam outlet 113. In practice, the mop head 11 may be formed with only one side steam outlet 112 or more than two side steam outlets 112.

The steam generator 2 is mounted in the mop handle 12 of the mop body 1, and generates steam that flows into the mop head 11. Since how the steam generator 2 generates the steam or how the steam is conveyed into the mop head 11 is well known to those skilled in the art, and is not the point of this disclosure, it is not further detailed hereinafter.

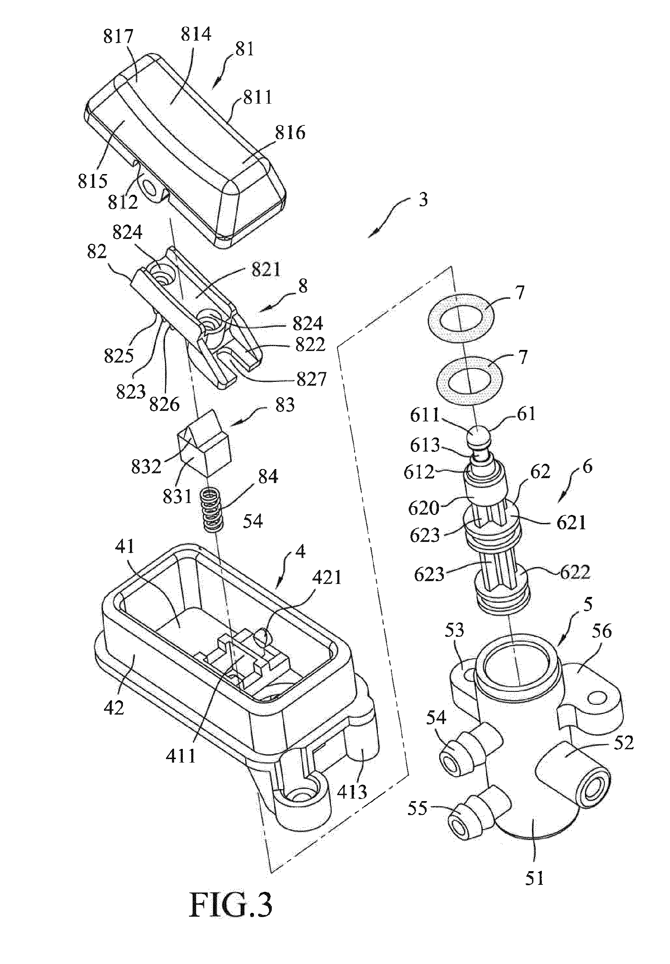

Referring further to Figs. 3 to 5, the control system 3 includes a mounting seat 4, a hollow valve seat 5, a valve member 6, two sealing rings 7, a switch unit 8, a retention unit and a conveying unit 9.

The mounting seat 4 is mounted in the installation space 111 of the mop head 11, and has a rectangular bottom wall 41, a surrounding wall 42 extending upwardly from a periphery of the bottom wall 41, a mounting structure 411 formed on the bottom wall 41, a first connecting portion 412 extending downwardly from the mounting structure 411, and a second connecting portion 413 extending downwardly from a short edge of the bottom wall 41. The mounting structure 411 includes a post 414 disposed at the central position of the bottom wall 41. The mounting seat 4 further has two pivot axles 421 each being disposed at a central portion of a respective one of two long wall segments of the surrounding wall 42 (only one is shown in the Fig. 3). In this embodiment, the two long wall segments of the surrounding wall 42 extend in a left-and-right direction.

The valve seat 5 has a tubular seat body 51, an inlet tube 52, a first connecting block 53, an upper outlet tube 54, a lower outlet tube 55 and a second connecting block 56. The seat body 51 extends downwardly from a portion of the bottom wall 41 of the mounting seat 4 that is located between the mounting structure 411 and the second connecting portion 413, and defines an inner space 511 therein that communicates spatially with a space enclosed by the surrounding wall 42 of the mounting seat 4. The inlet tube 52 and the first connecting block 53 are provided respectively at two opposite sides of the seat body 51 in the left-and-right direction. The upper outlet tube 54 and the second connecting block 56 are provided respectively at two opposite sides of the seat body 51 in a front-and-rear direction. The inlet tube 52 communicates fluidly the steam generator 2 and the seat body 51. The upper outlet tube 54 communicates fluidly the seat body 51 and the side steam outlets 112. The lower outlet tube 55 is provided below the upper outlet tube 54, and communicates fluidly the seat body 51 and the bottom steam outlet 113. The inlet tube 52 is located between and spaced apart from the upper and lower outlet tubes 54, 55 in an up-and-down direction. The first connecting block 53 is connected to the first connecting portion 412 of the mounting seat 4 by a screw (not shown). The second connecting block 56 is connected to the second connecting portion 413 of mounting seat 4 by a screw (not shown).

The valve member 6 includes a valve body 62 that is movable within the inner space 511 of the seat body 51 in the up-and-down direction, and a valve head 61 that is connected co-movably to the valve body 62 and that extends into the space enclosed by the surrounding wall 42 of the mounting seat 4. The valve head 61 has a rounded head portion 611, a neck portion 613 that extends downwardly from the head portion 611, and a bottom portion 612 that is connected to a lower end of the neck portion 613. The neck portion 613 has a cross-section smaller that those of the head portion 611 and the bottom portion 612. The valve body 62 has a top portion 620 that is engaged with the bottom portion 612 of the valve head 61, an upper flange portion 621 that is disposed under and spaced apart from the top portion 620, a lower flange portion 622 that is disposed under and spaced apart from the upper flange portion 621, and two rod portions 623 that are respectively connected between the top portion 620 and the upper flange portion 621 and between the upper and lower flange portions 621, 622. The sealing rings 7 are respectively sleeved on the upper and lower flange portions 621, 622 for respectively sealing up a gap between the upper flange portion 621 and an inner surrounding surface of the seat body 51 that define the inner space 511, and a gap between the lower flange portion 622 and the inner surrounding surface of the seat body 51 such that fluid communication between top and bottom sides of each of the upper and lower flange portions 621, 622 is prevented. In this embodiment, each of the rod portions 623 has a crucial cross-section such that the cross-sectional area of each of the rod portions 623 is relatively small.

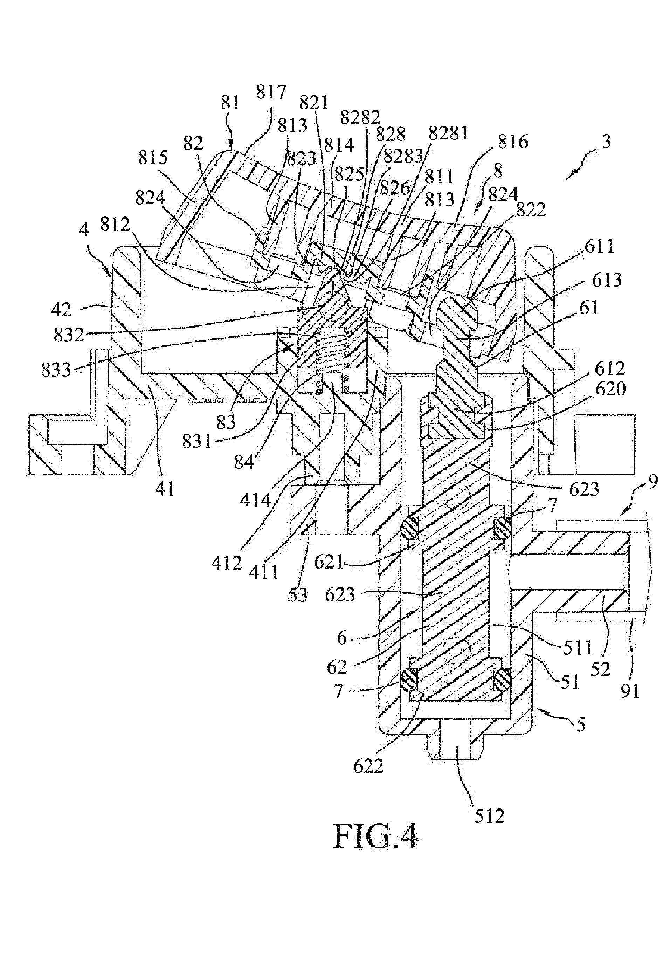

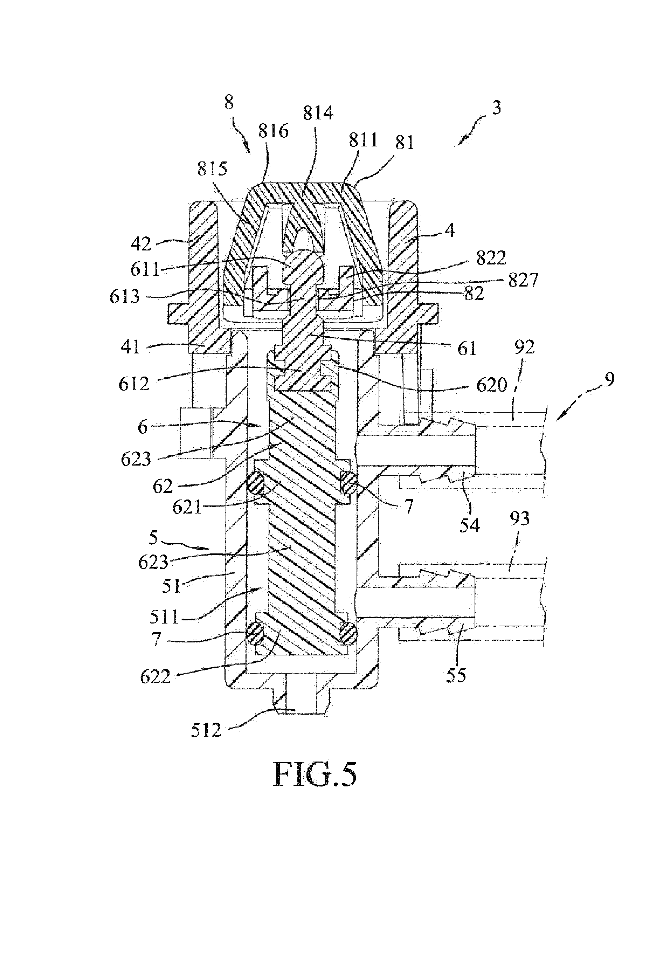

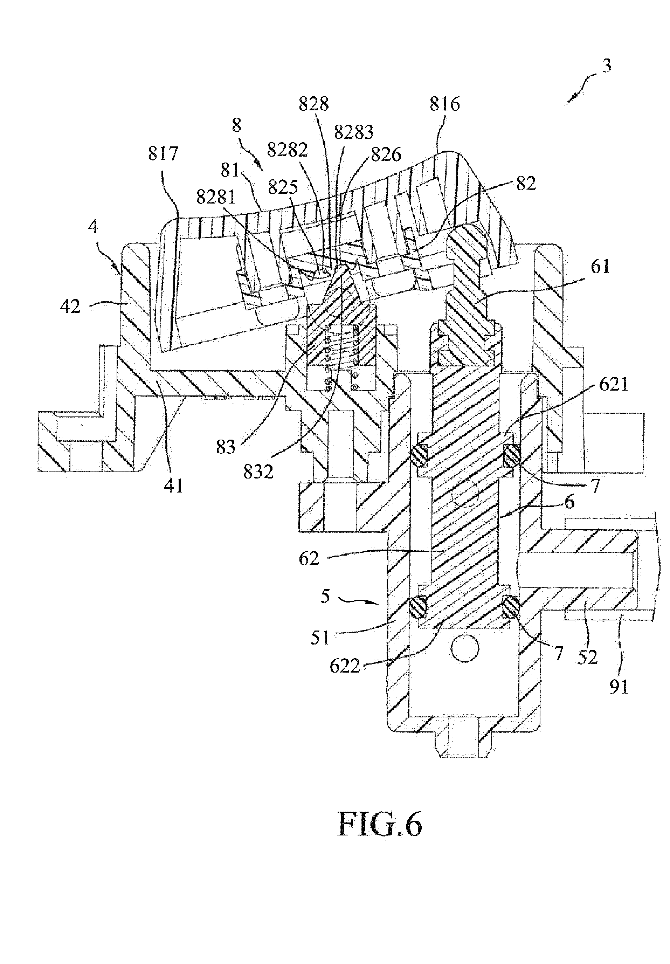

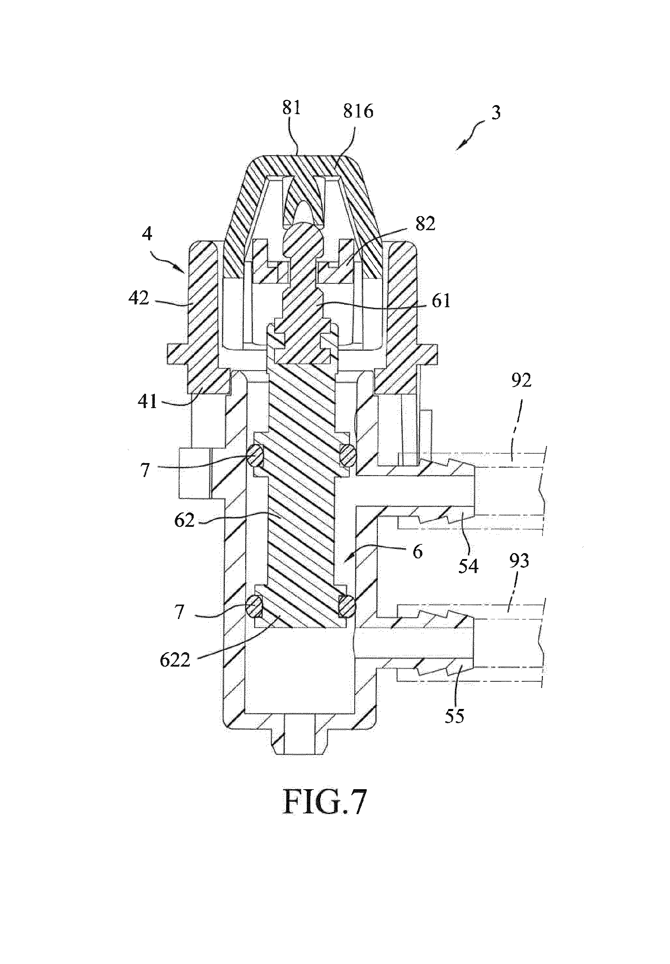

The valve member 6 is movable relative to the valve seat 5 in the up-and-down direction between a lower position (see Figs. 4 and 5) where the upper flange portion 621 is located between the upper outlet tube 54 and the inlet tube 52, and the lower flange portion 622 is located below the lower outlet tube 55 and the inlet tube 52, so that fluid communication between the inlet tube 52 and the upper outlet tube 54 is prevented and fluid communication between the inlet tube 52 and the lower outlet tube 55 is permitted, and an upper position (see Figs. 6 and 7) where the upper flange portion 621 is located above the upper outlet tube 54 and the inlet tube 52, and the lower flange portion 622 is located between the inlet tube 52 and the lower outlet tube 55, so that the fluid communication between the inlet tube 52 and the upper outlet tube 54 is permitted and the fluid communication between the inlet tube 52 and the lower outlet tube 55 is prevented.

Therefore, when the valve member 6 is at the lower position, the steam generated by the steam generator 2 is prevented from flowing into the upper outlet tube 54 and flows into the lower outlet tube 55 via a space between the upper and lower flange portions 621, 622, to be expelled from the bottom steam outlet 113. When the valve member 6 is at the upper position, the steam generated by the steam generator 2 is prevented from flowing into the lower outlet tube 55 and flows into the upper outlet tube 54 via the space between the upper and lower flange portions 621, 622, to be expelled from the side steam outlets 112.

It is noted that the valve seat 5 further has a communication tube portion 512 that is provided at a bottom end of the seat body 51, and that communicates fluidly the seat body 51 and the ambiance for facilitating the movement of the valve member 6 relative to the valve seat 5.

The switch unit 8 includes a pushbutton 81, and a couple member 82 connected to the push button 81.

The pushbutton 81 is connected pivotably to the mounting seat 4 and includes an elongate press housing 811, a pair of pivot portions 812 each of which is disposed at a center of a respective one of two long sides of the press housing 811 to define a first end portion 816 and a second end portion 817 of the press housing 811 that are disposed respectively at two opposite sides of the pivot portions 812 in a longitudinal direction of the press housing 811, and two spaced-apart connecting parts 813 that extend downwardly from the press housing 811. In this embodiment, the longitudinal direction of the press housing 811 is the left-and-right direction. The press housing 811 has a concave top wall 814, and a surrounding wall 815 that extends downwardly and divergently from a periphery of the top wall 814. The pivot portions 812 are connected pivotally and respectively to the pivot axles 421. The first end portion 816 is disposed proximate to the valve member 6. The second end portion 817 is disposed distal from the valve member 6. Each of the connecting parts 813 extends downwardly from the top wall 814 of the press housing 811, and is configured as a tube.

The couple member 82 has a main body 821 that is connected co-movably to the pushbutton 81, and an engaging portion 822 that is connected to the main body 821 and that is disposed adjacent to the first end portion 816 of the pushbutton 81. The main body 821 is formed with two spaced-apart through holes 824. The main body 821 is connected to the pushbutton 81 by two screws (see Fig. 4) each extending through a respective one of the through holes 824 and threaded to a corresponding one of the connecting parts 813. The engaging portion 822 is formed with a notch 827 indented toward the main body 821 for being engaged with the neck portion 613 of the valve member 6. Therefore, the pushbutton 81 is pressable to drive the movement of the valve member 6 between the upper and lower positions for switching the control system 3 between a first state (see Figs. 4 and 5) where the first end portion 816 is located below the second end portion 817 in the up-and-down direction and the valve member 6 is at the lower position, and a second state (see Fig. 6 and 7) where the first end portion 816 is located above the second end portion 817 in the up-and-down direction and the valve member 6 is at the upper position. The couple member 82 further has a positioning structure 823 that is formed on a bottom surface of the main body 821, and that has a projection 828 tapering downwardly, and first and second positioning grooves 825, 826 located respectively at two opposite sides of the projection 828 in the longitudinal direction of the press housing 811. The projection 828 has a tip portion 8281, and inclined first and second side surfaces 8282, 8283 that respectively face the first and second positioning grooves 825, 826.

The retention unit includes a positioning member 83 that is movable between the switching unit 8 and the mounting seat 4, and a resilient member 84 that is connected between the positioning member 83 and the mounting seat 4 for biasing resiliently the positioning member 83 toward the positioning structure 823 of the couple member 82. The positioning member 83 has a cubic mount portion 831 that has a circular installation hole 833 formed in a bottom surface of the mount portion 831, and a tapered positioning portion 832 that protrudes upwardly from the mount portion 831. The resilient member 84 has a top end extending into the installation hole 833, and a bottom end sleeved on the post 414 of the mounting structure 411 of the mounting seat 4. When the control system 3 is in the first state, the positioning portion 832 is biased upwardly to engage the first positioning groove 825 for retaining the valve member 6 at the lower position. When the control system 3 is in the second state, the positioning portion 832 is biased upwardly to engage the second positioning groove 826 for retaining the valve member 6 at the upper position. When the control system 3 is switched between the first and second states, for example, from the first state to the second state, the first side surface 8282 of the projection 828 pushes the positioning portion 832 of the positioning member 83 to move the positioning member 83 downwardly against the biasing action of the resilient member 84 when the second end portion 817 of the press housing 811 is depressed. During the abovementioned operation, the positioning portion 832 of the positioning member 83 is moved relative to the positioning structure 823 toward the tip portion 8281. Note that the resilient member 84 tends to retain the state of the control system 3, and generates a restoring force in response to the depression of the second end portion 817 of the press housing 811 before the positioning portion 832 is separated from the first side surface 8282. After the positioning portion 832 is moved past the tip portion 8281, the positioning member 83 is biased by the restoring force of the resilient member 84 to move upwardly, and to push the positioning portion 832 against the second side surface 8283 of the projection 828 so as to rise the first end portion 816 of the press housing 811 until the positioning portion 832 engages the second positioning groove 826. Note that the resilient member 84 tends to change the state of the control system 3 after the positioning portion 832 is moved past the tip portion 8281. The control system 3 can be switched from the second state to the first state in a manner similar to the above. Moreover, the positioning portion 832 of the positioning member 83 produces an indicating sound when the positioning portion 832 is moved past the tip portion 8281 of the projection 828 of the positioning structure 823.

The conveying unit 9 includes a first conveying duct 91 that communicates fluidly and steam generator 2 and the inlet tube 52, a second conveying duct 92 that communicates fluidly the upper outlet tube 52 and the side steam outlets 112, and a third conveying duct 93 that communicates fluidly the lower outlet tube 53 and the bottom steam outlets 113.

To sum up, in use of the steam mop of this disclosure, the switching operation of the control system 3 between the first and second states is achieved by depression of the pushbutton 81. Moreover, by virtue of the retention unit, the current state of the control system 3 is maintained steadily.

## Claims

1. A steam mop comprising:
a mop body (1) including a hollow mop head (11), and a graspable mop handle (12) that is connected to said mop head (11), said mop head (11) having a side portion that is formed with a side steam outlet (112), and a bottom portion that is formed with a bottom steam outlet (113) ;
a steam generator (2) connected to said mop body (1) and generating steam;
a control system (3) including a mounting seat (4), a hollow valve seat (5), a valve member (6) and a switch unit (8), said mounting seat (4) being mounted in said mop head (11), said valve seat (5) being connected to said mounting seat (4) and communicating fluidly with each of said steam generator (2) and said side and bottom steam outlets (112, 113), said valve member (6) extending into said valve seat (5), and being movable relative to said valve seat (5) in an up-and-down direction such that said control system (3) is switchable between a first state where the steam generated by said steam generator (2) is expelled from said bottom steam outlet (113), and a second state where the steam generated by said steam generator (2) is expelled from said side steam outlet (112), said switch unit (8) including a pushbutton (81) that is mounted movably to said mounting seat (4), that is coupled to said valve member (6), and that is operable to drive movement of said valve member (6) for switching said control system (3) between the first and second states.

2. The steam mop as claimed in claim 1, wherein said side steam outlet (112) is formed in a front side portion of said mop head (11).

3. The steam mop as claimed in claim 2, wherein: said valve seat (5) has a tubular seat body (51), an inlet tube (52) that communicates fluidly said steam generator (2) and said seat body (51), an upper outlet tube (54) that communicates fluidly said seat body (51) and said side steam outlet (112), and a lower outlet tube (55) that communicates fluidly said seat body (51) and said bottom steam outlet (113); when said control system (3) is in the first state, fluid communication between said inlet tube (52) and said upper outlet tube (54) is prevented and fluid communication between said inlet tube (52) and said lower outlet tube (55) is permitted, so that the steam generated by said steam generator (2) is expelled from said bottom steam outlet (113) ; and when said control system (3) is in the second state, the fluid communication between said inlet tube (52) and said upper outlet tube (54) is permitted and the fluid communication between said inlet tube (52) and said lower outlet tube (55) is prevented, so that the steam generated by said steam generator (2) is expelled from said side steam outlet (112).

4. The steam mop as claimed in claim 3, wherein: said inlet tube (52) is located between and spaced apart from said upper and lower outlet tubes (54, 55) in the up-and-down direction, said valve member (6) extending into said seat body (4), and having a head portion (611) that is coupled to said switch unit (8), and an upper flange portion (621) and a lower flange portion (622) that are located below said head portion (611) and that are spaced apart from each other in the up-and-down direction; when said control system (3) is in the first state, said valve member (6) is at a lower position where said upper flange portion (621) is located between said upper outlet tube (54) and said inlet tube (52) and said lower flange portion (622) is located below said lower outlet tube (55) and said inlet tube (52) such that the steam generated by said steam generator (2) is prevented from flowing into said upper outlet tube (54) and flows into said lower outlet tube (55) via a space between said upper and lower flange portions (621, 622); and when said control system (3) is in the second state, said valve member (6) is at an upper position where said upper flange portion (621) is located above said upper outlet tube (54) and said inlet tube (52), and said lower flange portion (622) is located between said inlet tube (52) and said lower outlet tube (55) such that the steam generated by said steam generator (2) is prevented from flowing into said lower outlet tube (55) and flows into said upper outlet tube (54) via the space between said upper and lower flange portions (621, 622).

5. The steam mop as claimed in claim 4, wherein said valve member (6) further has two rod portions (623) each having a crucial cross-section, one of said rod portions (623) being connected between said head portion (611) and said upper flange portion (621), the other one of said rod portions (623) being connected between said upper and lower flange portions (621, 622).

6. The steam mop as claimed in claim 4, wherein: said mounting seat (4) has a bottom wall (41) and a surrounding wall (42) extending upwardly from a periphery of said bottom wall (41), said pushbutton (81) being connected pivotably to said mounting seat (4) and including an elongate press housing (811), and a pair of pivot portions (812) each of which is disposed at a center of a respective one of two long sides of said press housing (811) to define a first end portion (816) and a second end portion (817) of said press housing (811) that are disposed respectively at two opposite sides of said pivot portions (812) in a longitudinal direction of said press housing (811), said pivot portions (812) being connected pivotally to said surrounding wall (42) of said mounting seat (4), said first end portion (816) being disposed proximate to said valve member (6), said second end portion (817) being disposed distal from said valve member (6), said switch unit (8) further including a couple member (82) that is connected co-movably to said pushbutton (81), said couple member (82) having a main body (821) that is connected to said pushbutton (81), and an engaging portion (822) that is connected to said main body (821) and that is disposed adjacent to said first end portion (816), said engaging portion (822) being formed with a notch (827) indented toward said main body (821) for being coupled to said head portion (611) of said valve member (6), so that said pushbutton (81) is pressable to drive the movement of said valve member (6) between said upper and lower positions; when said control system (3) is in the first state, said first end portion (816) is located below said second end portion (817) in the up-and-down direction, and said valve member (6) is at the lower position; and when said control system (3) is in the second state, said first end portion (816) is located above said second end portion (817) in the up-and-down direction, and said valve member (6) is at the upper position.

7. The steam mop as claimed in claim 6, wherein said couple member (82) further has a positioning structure (823) that is formed on a bottom surface of said main body (821), and that has first and second positioning grooves (825, 826) spaced apart from each other in the longitudinal direction of said press housing (811), said control system (3) further including a positioning member (83) that is movable between said switch unit (8) and said mounting seat (4), and a resilient member (84) that is connected between said positioning member (83) and said mounting seat (4) for biasing resiliently said positioning member (83) toward said positioning structure (823) of said couple member (82), said positioning member (83) having a hollow mount portion (831) for extension of said resilient member (84) thereinto, and a positioning portion (832) that protrudes upwardly from said mount portion (831) such that, when said control system (3) is in the first state, said positioning portion (832) engages said first positioning groove (825) for retaining said valve member (6) at the lower position, and when said control system (3) is in the second state, said positioning portion (832) engages said second positioning groove (826) for retaining said valve member (6) at the upper position.

8. The steam mop as claimed in claim 7, wherein said positioning portion (832) of said positioning member (83) produces an indicating sound when said positioning portion (832) is moved between said first and second positioning grooves (825, 826).

9. A control system (3) adapted for use in a steam mop comprising:
a valve member (6) movable between first and second positions;
a switch unit (8) coupled to said valve member (6), and operable to move said valve member (6) between the first and second positions; and
a retention unit including an energy-storing member (84) that is coupled to said switch unit (8), and that retards the operation of said switch unit (8) to store energy, and subsequently releases energy to aid the operation of said switch unit (8) when said switch unit (8) is operated to move said valve member (6) from one of the first and second positions to the other one of the first and second positions.

10. The control system (3) as claimed in claim 9, wherein said switch unit (8) has a positioning structure (823) that is formed on a bottom surface thereof, said positioning structure (823) having a projection (828) that tapers downwardly, and first and second positioning grooves (825, 826) that are located respectively at two opposite sides of said projection (828), said projection (828) having a tip portion (8281), and inclined first and second side surfaces (8282, 8283) that respectively face said first and second positioning grooves (825, 826), said retention unit further including a positioning member (83) that has a mount portion (831), and a tapered positioning portion (832) protruding upwardly from said mount portion (831), said energy-storing member (84) acting said positioning member (83) for biasing resiliently said positioning portion (832) of said positioning member (83) to engage one of said first and second positioning grooves (825, 826) so as to maintain the position of said valve member (6), said positioning portion (832) being movable to sequentially contact one of said first and second side surfaces (8282, 8283), said tip portion (8281) and the other one of said first and second side surfaces (8282, 8283) during the operation of said switch unit (8) for moving said valve member (6) from one of the first and second positions to the other one of the first and second positions.

11. The control system (3) as claimed in claim 9, further comprising a mounting seat (4) that has two pivot axles (421), said valve member (6) having a rounded head portion (611), and a neck portion (613) that extends downwardly from said head portion (611), said switch unit (8) further having a pair of pivot portions (812) that are connected pivotally and respectively to said pivot axles (421) of said mounting seat (4), a notch (827) that is engaged with said neck portion (613) of said valve member (6) such that said switch unit (8) is pivotable relative to said mounting seat (4) for driving movement of said valve member (6).

12. The control system (3) as claimed in claim 9, wherein said energy-storing member (84) being configured as a coiled compression spring (84).

13. The control system (3) as claimed in claim 10, wherein said positioning portion (832) of the positioning member (83) produces an indicating sound when said positioning portion (832) is moved past said tip portion (8281) of said projection (828) of said positioning structure (823).
